(19) Europäisches Patentamt / European Patent Office / Office européen des brevets

(11) **EP 3 285 394 B1**

(12) **EUROPÄISCHE PATENTSCHRIFT**

(45) Veröffentlichungstag und Bekanntmachung des Hinweises auf die Patenterteilung:
**03.04.2019 Patentblatt 2019/14**

(51) Int Cl.:
***H02P 27/08*** *(2006.01)*

(21) Anmeldenummer: **17182380.0**

(22) Anmeldetag: **20.07.2017**

(54) **VERFAHREN ZUM BETREIBEN EINER ELEKTRISCHEN MASCHINE UND ELEKTRISCHE MASCHINE**

ELECTRICAL MACHINE AND METHOD FOR OPERATING AN ELECTRICAL MACHINE AND ELECTRICAL MACHINE

PROCÉDÉ DE FONCTIONNEMENT D'UNE MACHINE ÉLECTRIQUE ET MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.08.2016 DE 102016215174**

(43) Veröffentlichungstag der Anmeldung:
**21.02.2018 Patentblatt 2018/08**

(73) Patentinhaber: **Brose Fahrzeugteile GmbH & Co. Kommanditgesellschaft, Würzburg
97076 Würzburg (DE)**

(72) Erfinder: **SCHWARZKOPF, Johannes
97828 Marktheidenfeld (DE)**

(74) Vertreter: **FDST Patentanwälte
Nordostpark 16
90411 Nürnberg (DE)**

(56) Entgegenhaltungen:
**DE-A1-102014 000 945**

**Beschreibung**

Die Erfindung betrifft ein Verfahren zum Betreiben einer elektrischen Maschine mit einer Stromquelle und mit einem Elektromotor sowie mit einem dazwischen geschalteten Stromrichter, bei welchem ein Eingangsstrom der Stromquelle mittels einer pulsweitenmodulierten Ansteuerung einer Anzahl von Halbleiterschaltern des Stromrichters in einen mehrphasigen Ausgangsstrom für den Elektromotor gewandelt wird. Die Erfindung betrifft weiterhin eine nach einem derartigen Verfahren betriebene elektrische Maschine, insbesondere für ein Kraftfahrzeug.

Elektromotorisch betriebene Verstellsysteme als Kraftfahrzeugkomponenten, wie beispielsweise Fensterheber, Sitzverstellungen, Tür- und Schiebedachantriebe oder Kühlerlüfterantriebe sowie Pumpen oder Innengebläse weisen typischerweise eine elektrische Maschine mit einem gesteuerten Elektromotor auf. Zum Beispiel sind hierfür bürstenlose Elektromotoren bekannt, bei denen ein gegenüber einem Stator drehbar gelagerter Rotor durch ein magnetisches Drehfeld angetrieben wird. Hierzu werden Phasenwicklungen des Stators mit einem entsprechenden elektrischen Dreh- oder Motorstrom beaufschlagt, welcher mittels eines Controllers als Teil einer (Motor-)Elektronik gesteuert und geregelt wird.

Derartige elektrische Maschinen umfassen in der Regel eine (Hochvolt-)Batterie als fahrzeuginternen Energiespeicher, aus welchem der Elektromotor mit elektrischer Energie in Form eines Gleichstroms versorgt wird. Zur Wandlung des Gleichstroms in den Motorstrom ist geeigneterweise ein Stromrichter (Wechselrichter, Inverter) zwischen dem Energiespeicher und dem Elektromotor verschaltet. Dem Energiespeicher ist hierbei ein (Gleichspannungs-)Zwischenkreis nachgeordnet, an welchen eine Brückenschaltung des Stromrichters angeschlossen ist. Der Energiespeicher und der Zwischenkreis wirken hierbei als eine Stromquelle zur Bereitstellung des eingangsseitigen Gleichstroms (Eingangsstrom) für den Stromrichter. Der Motorstrom wird durch eine pulsweitenmodulierte (PWM) Ansteuerung von Halbleiterschaltern der Brückenschaltung als ein mehrphasiger Ausgangsstrom erzeugt. Durch die Pulse der PWM-Ansteuerung werden die Halbleiterschalter getaktet zwischen einem leitenden und einem sperrenden Zustand umgeschaltet.

Durch die Umschaltvorgänge der Halbleiterschalter werden Wechselströme in den Leitungen des Zwischenkreises beziehungsweise der Stromquelle erzeugt. Diese Wechselströme sind hinsichtlich einer Einhaltung von EMV-Richtlinien (elektromagnetische Verträglichkeit) als kritisch zu bewerten.

Die DE 10 2014 00 945 A1 offenbart ein Verfahren zum Betrieb einer rotierenden bürstenlosen elektrischen Maschine, bei welchem die Phasenwicklungen jeweils gesondert mit pulsweitenmodulierten Spannungssignalen beaufschlagt werden, und bei welchem wenigstens zeitweise eine ausgewählte Phasenwicklung mit einem konstanten elektrischen Potenzial verbunden wird. Bei dem bekannten Verfahren werden zur Reduzierung der Schaltvorgänge sowie zur Verringerung des Wechselstromanteils der Stromquelle während der Zeit, in der die ausgewählte Phasenwicklung mit dem Potenzial verbunden ist, die Pulse der pulsweitenmodulierten Signale, mit denen die übrigen Phasenwicklungen beaufschlagt werden, wenigstens zeitweise gegeneinander phasenverschoben.

Der Erfindung liegt die Aufgabe zugrunde, ein besonders geeignetes Verfahren zum Betrieb einer elektrischen Maschine anzugeben. Insbesondere soll das EMV-Verhalten der elektrischen Maschine während des Betriebs verbessert werden. Der Erfindung liegt weiterhin die Aufgabe zugrunde, eine nach einem derartigen Verfahren arbeitende elektrische Maschine anzugeben.

Hinsichtlich des Verfahrens wird die genannte Aufgabe mit den Merkmalen des Anspruchs 1 und hinsichtlich der elektrischen Maschine mit den Merkmalen des Anspruchs 10 erfindungsgemäß gelöst. Vorteilhafte Ausgestaltungen und Weiterbildungen sind Gegenstand der jeweiligen Unteransprüche.

Das erfindungsgemäße Verfahren ist zum Betreiben einer elektrischen Maschine geeignet und eingerichtet. Die elektrische Maschine weist hierbei einen Energiespeicher mit einem nachgeschalteten (Gleichspannungs-)Zwischenkreis auf, die zusammen als eine Stromquelle (Spannungsversorgung) für einen Elektromotor der Maschine ausgeführt sind. Zwischen der Stromquelle und dem Elektromotor ist hierbei ein Stromrichter, beispielsweise in Form eines Wechselrichters (Inverter), verschaltet.

Im Betrieb der Maschine wandelt der Stromrichter einen Eingangsstrom der Stromquelle in einen mehrphasigen, insbesondere dreiphasigen, Ausgangsstrom (Motorstrom, Drehstrom) für den Elektromotor. Hierzu wird eine Anzahl von in den Zwischenkreis verschalteten Halbleiterschaltern des Stromrichters mit einer pulsweitenmodulierten (PWM) Ansteuerung getaktet angesteuert. Die PWM-Ansteuerung weist in jeder Periode für mindestens eine Phase ein während einer jeweiligen Periodendauer erzeugtes, impulsförmiges Signal (Puls) zum Umschalten der jeweiligen Halbleiterschalter auf. Der (Signal-)Puls weist hierbei eine Pulsdauer auf, das bedeutet eine Zeitdauer, während welcher der Halbleiterschalter umgeschaltet wird (Aktivzeit).

Verfahrensgemäß ist vorgesehen, dass in einer Periode der Ansteuerung ein Puls in einen voreilenden, das bedeutet in der Periodendauer zeitlich früheren, ersten Halbpuls und in einen nacheilenden, das bedeutet in der Periodendauer zeitlich späteren, zweiten Halbpuls mit jeweils halber Pulsdauer geteilt wird. Der erste Halbpuls wird mit einer ersten Verschiebezeit und der zweite Halbpuls wird mit einer zweiten Verschiebezeit innerhalb der Periodendauer der Periode zeitlich gegeneinander verschoben. Mit anderen Worten erfolgt eine Pulsverschiebung innerhalb einer Phase. Dadurch wird die Periodizität eines Wechselstroms, der im Zuge der PWM-Ansteuerung der Halbleiterschalter in dem Zwischenkreis der Stromquelle erzeugt wird, gezielt gestört. Somit wird der Wechselstromanteil bei der (PWM-)Taktfrequenz reduziert, wodurch einerseits die Belastung der Strom- oder Spannungsquelle verringert wird.

In einer geeigneten Weiterbildung wird der erste Halbpuls mit der ersten Verschiebezeit in der Periode zeitlich verzögert, das bedeutet der erste Halbpuls wird zu einem späteren Zeitpunkt in der Periodendauer erzeugt. Der zweite Halbpuls wird hierbei mit der zweiten Verschiebezeit in der Periode zeitlich beschleunigt, das bedeutet der zweite Halbpuls wird zu einem früheren Zeitpunkt in der Periodendauer erzeugt. Insbesondere wird der zweite Halbpuls vor dem ersten Halbpuls erzeugt. Dies bedeutet, der vor der Verschiebung voreilende erste Halbpuls eilt nach der Verschiebung dem zweiten Halbpuls nach. Dadurch wird sichergestellt, dass die Halbpulse innerhalb der Periode bleiben. Mit anderen Worten ändert sich somit nicht die gemeinsame Aktivzeit einer Phase während der Periode, wodurch der Betrieb der Maschine nicht nachteilig beeinflusst wird.

Durch die Verschiebung ändert sich im Wesentlichen die Reihenfolge der Halbpulse während der Periode. Da beide Halbpulse im Wesentlichen identisch sind, ist es alternativ jedoch ebenso möglich, die zeitliche Reihenfolge der Halbpulse innerhalb der Periode beizubehalten, wobei die entsprechenden Verschiebezeiten des ersten und zweiten Halbpulses reduzierte Werte aufweisen.

In einer vorteilhaften Ausführung wird für den Puls als die erste und/oder zweite Verschiebezeit während der Periodendauer ein Bruchteil der Periodendauer mit einem geradzahligem Nenner eingestellt. Vorzugsweise wird als Nenner eine Zweierpotenz ($2^n$, $n \in \mathbb{N}_0$ ) verwendet. Insbesondere wird n = 1 verwendet, das bedeutet die erste und/oder zweite Verschiebezeit ist gleich der halben Periodendauer. Durch eine derartige Verschiebung um die halbe Periodendauer wird die Amplitude des Wechselstromanteils - und der somit erzeugten, EMV-kritischen Magnetfeldaussendung - bei der Taktfrequenz der PMW-Ansteuerung reduziert. Entsprechend werden für n = 2, das bedeutet bei einer Verschiebung um ein Viertel der Periodendauer, die Wechselstromanteile (Frequenzanteile) bei der doppelten Taktfrequenz reduziert.

In einer zweckmäßigen Ausbildung werden die erste und zweite Verschiebezeit des (Halb-)Pulses während der Periode betraglich gleich eingestellt. Mit anderen Worten weisen die erste und zweite Verschiebezeit den gleichen Wert auf, wobei die zweite Verschiebezeit aufgrund der unterschiedlichen Verschieberichtung ein anderes Vorzeichen als die erste Verschiebezeit aufweist. Dadurch ist eine einfache und aufwandarme Verschiebung der Halbpulse realisiert.

In einer vorteilhaften Weiterbildung wird die Dauer der ersten und/oder zweiten Verschiebezeit des Pulses für aufeinanderfolgende Perioden geändert. Mit anderen Worten werden die Verschiebezeiten von Puls zu Puls geändert. Somit wird die Periodizität der erzeugten Wechselstromanteile zuverlässig reduziert, sodass die Amplituden bei den betroffenen Wiederholungs- oder Taktfrequenzen reduziert werden.

In einer möglichen Weiterbildungsform ist es beispielsweise denkbar, dass die Verschiebezeiten jeder zweiten Periode der PWM-Ansteuerung auf null gesetzt werden, das bedeutet keine Verschiebung durchgeführt wird. Mit anderen Worten erfolgt eine Verschiebung der Halbpulse lediglich jede zweite Periode. Beispielsweise bei einer Verschiebung mit einer ersten und zweiten Verschiebezeit gleich der halben Periodendauer wird somit jede zweite Periode eine Invertierung der Phasenlage bei dem Wechselstromanteil an der Taktfrequenz erzeugt. Dadurch wird gewährleistet, dass der Wechselstromanteil an der Taktfrequenz reduziert wird.

In einer ebenso denkbaren alternativen Weiterbildungsform weisen mehrere aufeinanderfolgende Perioden beispielsweise die gleichen Verschiebungszeiten für die jeweiligen Pulse auf. Mit anderen Worten werden zum Beispiel mehrere Pulse hintereinander folgender Perioden verschoben oder nicht verschoben.

In einer denkbaren Ausbildung wird die Dauer der ersten und/oder zweiten Verschiebezeit des Pulses für jede Periode zufällig geändert. Mit anderen Worten weisen die Pulse von aufeinanderfolgenden Perioden zufällig unterschiedliche Verschiebezeiten auf. Durch die zufällig eingestellte Verschiebung der Pulse der Perioden untereinander wird eine besonders irreguläre beziehungsweise nicht periodische Störung der Wechselstromperiodizität erzeugt. Dadurch wird die Amplitude beziehungsweise das spektrale Gewicht des Wechselstromanteils an der Taktfrequenz auf möglichst viele verschiedene Frequenzen verteilt. Mit anderen Worten wird das Spektrum verbreitert oder breitbandig gemacht, wobei die dadurch entstehenden Wechselstromanteile jeweils eine vergleichsweise geringe Amplitude aufweisen, welche einfach mittels Filterschaltungen des Zwischenkreises gedämpft beziehungsweise reduziert werden können.

Ein weiterer oder zusätzlicher Aspekt der Erfindung sieht vor, dass die Periodendauer aufeinanderfolgender Perioden variiert wird. Dadurch wird die Periodizität der erzeugten Wechselstromanteile weiter gestört, sodass die Amplituden der relevanten Wechselstromanteile zuverlässig reduziert werden.

In einer vorteilhaften Ausgestaltung wird die erste und/oder zweite Verschiebezeit für Pulse unterschiedlicher Phasen unterschiedlich eingestellt. Dies bedeutet, dass die Pulse unterschiedlicher Phasen unterschiedliche Verschiebungen, oder eine oder mehrere Phasen keine Verschiebungen, aufweisen. Mit anderen Worten ist es möglich, dass die Verschiebungen nicht auf alle Phasen angewandt werden. Dies überträgt sich vorteilhaft auf eine weitere Reduzierung der Wechselstromanteile.

In einer geeigneten Weiterbildung wird die erste und/oder zweite Verschiebezeit für Pulse unterschiedlicher Phasen in voneinander unterschiedlichen Perioden angewendet. Dadurch wird eine besonders effektive Dämpfung oder Reduzierung der Wechselstromanteile gewährleistet.

In einer bevorzugten Anwendung ist die elektrische Maschine insbesondere für den elektromotorischen Antrieb in einem Kraftfahrzeug, beispielsweise für ein Verstellsystem als Kraftfahrzeugkomponente, geeignet und eingerichtet. Der Elektromotor ist vorzugsweise bürstenlos mit einem Stator und mit einem darin rotierbar gelagerten Rotor ausgeführt. Der Stator weist eine Anzahl von Phasenwicklungen auf, welche einerseits an den Stromrichter geführt und andererseits beispielsweise in einem gemeinsamen Verknüpfungspunkt (Sternpunkt) in Sternschaltung verschaltet sind.

Der Stromrichter weist einen Controller, das bedeutet ein Steuergerät, auf. Der Controller ist hierbei allgemein - programm- und/oder schaltungstechnisch - zur Durchführung des vorstehend beschriebenen Verfahrens geeignet und eingerichtet. Der Controller ist somit konkret dazu eingerichtet, während des Betriebs eine Modulation der PWM-Ansteuerung durchzuführen, bei welcher Pulse der Phasen geteilt und zeitlich innerhalb einer Periode verschoben werden.

In bevorzugter Ausgestaltung ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Benutzer - bei Ausführung der Betriebssoftware in dem Mikrocontroller automatisch Durchgeführt wird.

Der Controller kann im Rahmen der Erfindung alternativ auch durch ein nichtprogrammierbares elektronisches Bauteil, zum Beispiel einen ASIC (anwendungsspezifischer integrierter Schaltkreis), gebildet sein, in dem die Funktionalität zur Durchführung des Verfahrens mit schaltungstechnischen Mitteln implementiert ist.

Die mit dem Verfahren betriebene elektrische Maschine weist somit ein verbessertes Verhalten hinsichtlich einer EMV-Abstrahlung sowie hinsichtlich einer durch die Schaltprozesse der Halbleiterschalter auftretenden Geräuschentwicklung auf. Das erfindungsgemäße Verfahren ist insbesondere für den Einsatz in drehzahlgeregelten Systemen geeignet und eingerichtet. Grundsätzlich ist die Anwendung hierbei nicht auf den Automobilbereich eingeschränkt.

Nachfolgend wird ein Ausführungsbeispiel der Erfindung anhand einer Zeichnung näher erläutert. Darin zeigen in schematischen und vereinfachten Darstellungen:

Fig. 1    eine elektrische Maschine mit einer Stromquelle und mit einem Elektromotor sowie mit einem dazwischen verschalteten Stromrichter,

Fig. 2    drei Phasenwicklungen eines dreiphasigen Elektromotors der Maschine in Sternschaltung,

Fig. 3    ein Brückenmodul einer Brückenschaltung des Stromrichters zur Ansteuerung einer Phasenwicklung des Elektromotors,

Fig. 4    ein Ersatzschaltbild der Stromquelle, und

Fig. 5    ein Diagramm einer PWM-Ansteuerung der Phasenwicklungen.

Einander entsprechende Teile und Größen sind in allen Figuren stets mit den gleichen Bezugszeichen versehen.

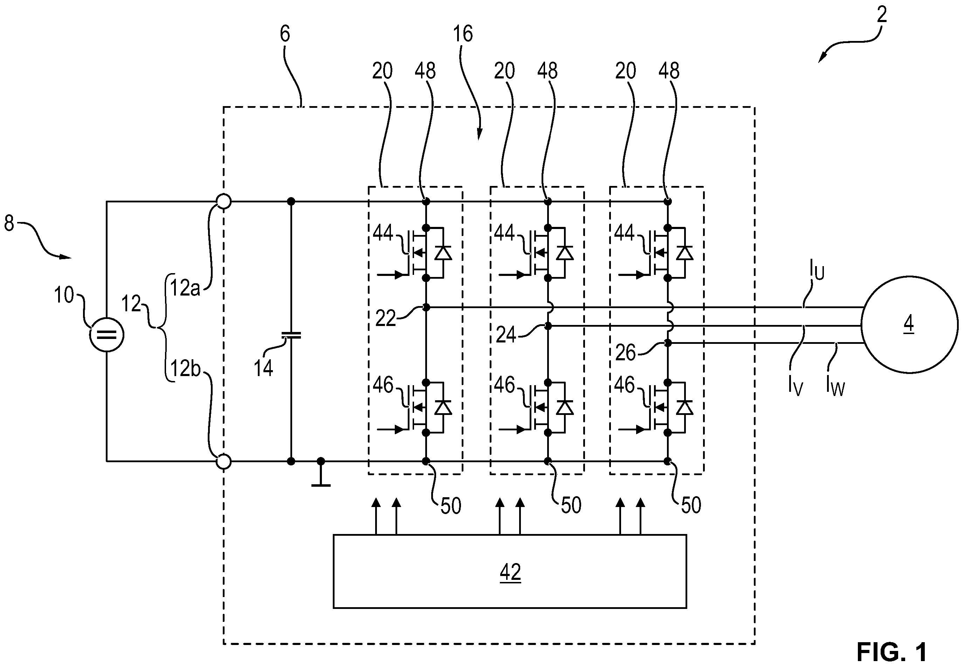

Die Fig. 1 zeigt eine elektrische Maschine 2 für ein elektromotorisches Verstellsystem eines nicht näher dargestellten Kraftfahrzeugs, beispielsweise ein Fensterheber oder eine Sitzverstellung. Die Maschine 2 umfasst hierzu einen dreiphasigen Elektromotor 4, welcher mittels eines Stromrichters 6 an eine Stromquelle (Spannungsversorgung) 8 angeschlossen ist. Die Stromquelle 8 umfasst in diesem Ausführungsbeispiel einen fahrzeuginternen Energiespeicher 10, beispielsweise in Form einer (Kraftfahrzeug-)Batterie, sowie einen damit verbundenen (Gleichspannungs-)Zwischenkreis 12, welcher sich zumindest teilweise in den Stromrichter 6 erstreckt.

Der Zwischenkreis 12 ist im Wesentlichen durch eine Hinleitung 12a und eine Rückleitung 12b gebildet, mittels welchen der Stromrichter 6 an den Energiespeicher 10 angeschlossen ist. Die Leitungen 12a und 12b sind zumindest teilweise in den Stromrichter 6 geführt, in welchen zwischen diesen ein Zwischenkreiskondensator 14 sowie eine Brückenschaltung 16 verschaltet sind.

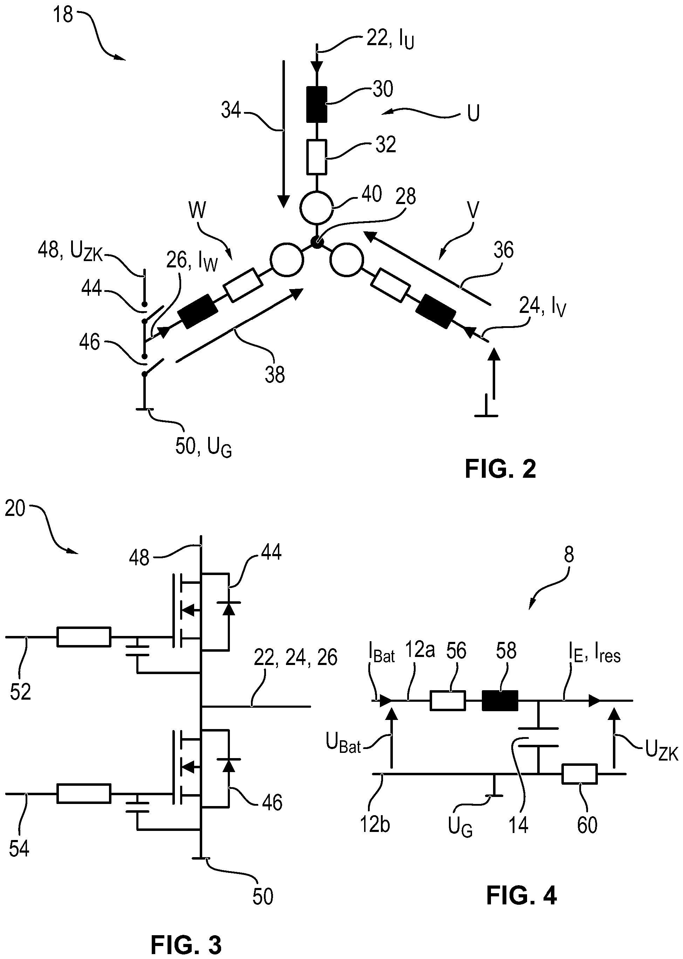

Im Betrieb der Maschine 2 wird ein der Brückenschaltung 16 zugeführter Eingangsstrom $I_E$ in einen dreiphasigen Ausgangsstrom (Motorstrom, Drehstrom) $I_U$, $I_V$, $I_W$ für die drei Phasen U, V, W des Elektromotors 4 gewandelt. Die nachfolgend auch als Phasenströme bezeichneten Ausgangsströme $I_U$, $I_V$, $I_W$ werden an die entsprechenden Phasen(-wicklungen) U, V, W (Fig. 2) eines nicht näher dargestellten Stators geführt.

In der Fig. 2 ist eine Sternschaltung 18 der drei Phasenwicklungen U, V, W dargestellt. Die Phasenwicklungen U, V und W sind mit jeweils einem (Phasen-)Ende 22, 24, 26 an ein jeweiliges Brückenmodul 20 (Fig. 3) der Brückenschaltung 16 geführt, und mit dem jeweils gegenüberliegenden Ende in einem Sternpunkt 28 als gemeinsamen Verbindungsanschluss miteinander verschaltet. In der Darstellung der Fig. 2 sind die Phasenwicklungen U, V und W jeweils mittels eines Ersatzschaltbildes in Form einer Induktivität 30 und eines ohmschen Widerstandes 32 sowie einem jeweiligen Spannungsabfall 34, 36, 38 gezeigt. Die jeweils über die Phasenwicklung U, V, W abfallende Spannung 34, 36, 38 ist schematisch durch Pfeile repräsentiert und ergibt sich aus der Summe der Spannungsabfälle über der Induktivität 30 und dem ohmschen Widerstand 32 sowie der induzierten Spannung 40. Die durch eine Bewegung eines Rotors des Elektromotors 4 induzierte Spannung 40 (elektromagnetische Kraft, EMK, EMF) ist in der Fig. 2 anhand eines Kreises dargestellt.

Die Ansteuerung der Sternschaltung 18 erfolgt mittels der Brückenschaltung 16. Die Brückenschaltung 16 ist mit den Brückenmodulen 20 insbesondere als eine B6-Schaltung ausgeführt. In dieser Ausgestaltungsform wird im Betrieb an jede der Phasenwicklungen U, V, W in hoher Schaltfrequenz getaktet zwischen einem hohen (Gleich-)Spannungsniveau der Zuleitung 12a und einem niedrigen Spannungsniveau der Rückleitung 12b umgeschaltet. Das hohe Spannungsniveau ist hierbei insbesondere eine Zwischenkreisspannung $U_{ZK}$ des Zwischenkreises 12, wobei das niedrige Spannungsniveau vorzugsweise ein Erdpotential $U_G$ ist. Diese getaktete Ansteuerung ist als eine - in Fig. 1 mittels Pfeilen dargestellte - PWM-Ansteuerung durch einen Controller 42 ausgeführt, mit welcher eine Steuerung und/oder Regelung der Drehzahl, der Leistung sowie der Drehrichtung des Elektromotors 4 möglich ist.

Die Brückenmodule 20 umfassen jeweils zwei Halbleiterschalter 44 und 46, welche in der Fig. 2 lediglich schematisch und beispielhaft für die Phase W dargestellt sind. Das Brückenmodul 20 ist einerseits mit einem Potentialanschluss 48 an die Zuleitung 12a und somit an die Zwischenkreisspannung $U_{ZK}$ angeschlossen. Andererseits ist das Brückenmodul 20 mit einem zweiten Potentialanschluss 50 an die Rückleitung 12b und somit an das Erdpotential $U_G$ kontaktiert. Über die Halbleiterschalter 44, 46 ist das jeweilige Phasenende 22, 24, 26 der Phase U, V, W entweder mit der Zwischenkreisspannung $U_{ZK}$ oder mit dem Erdpotential $U_G$ verbindbar. Wird der Halbleiterschalter 44 geschlossen (leitend) und der Halbleiterschalter 46 geöffnet (nicht leitend, sperrend), so ist das Phasenende 22, 24, 26 mit dem Potential der Zwischenkreisspannung $U_{ZK}$ verbunden. Entsprechend ist bei einem Öffnen des Halbleiterschalters 44 und einem Schließen des Halbleiterschalters 46 die Phase U, V, W mit dem Erdpotential $U_G$ kontaktiert. Dadurch ist es mittels der PWM-Ansteuerung möglich, jede Phasenwicklung U, V, W mit zwei unterschiedlichen Spannungsniveaus zu beaufschlagen.

In der Fig. 3 ist ein einzelnes Brückenmodul 20 vereinfacht dargestellt. In diesem Ausführungsbeispiel sind die Halbleiterschalter 44 und 46 als MOSFETs (metaloxide semiconductor field-effect transistor) realisiert, die jeweils mittels der PWM-Ansteuerung zwischen einem durchgeschalteten Zustand auf und einem sperrenden Zustand getaktet umschalten. Hierzu sind die jeweiligen Gateanschlüsse an entsprechende Steuerspannungseingänge 52, 54 geführt, mittels welcher die Signale der PWM-Ansteuerung des Controllers 42 übertragen werden.

Die Fig. 4 zeigt ein Ersatzschaltbild für die Stromquelle 8. Im Betrieb erzeugt der Energiespeicher 10 eine Batteriespannung $U_{Bat}$ sowie einen entsprechenden Batteriestrom $I_{Bat}$ zum Betrieb des Stromrichters 6. In der Fig. 4 ist der Innenwiderstand des Energiespeichers 10 als ein ohmscher Widerstand 56 und eine Eigeninduktivität des Energiespeichers 10 als eine Induktivität 58 dargestellt. In der Rückleitung 12b ist ein Shuntwiderstand 60 geschaltet, an welchem die Zwischenkreisspannung $U_{ZK}$ abfällt.

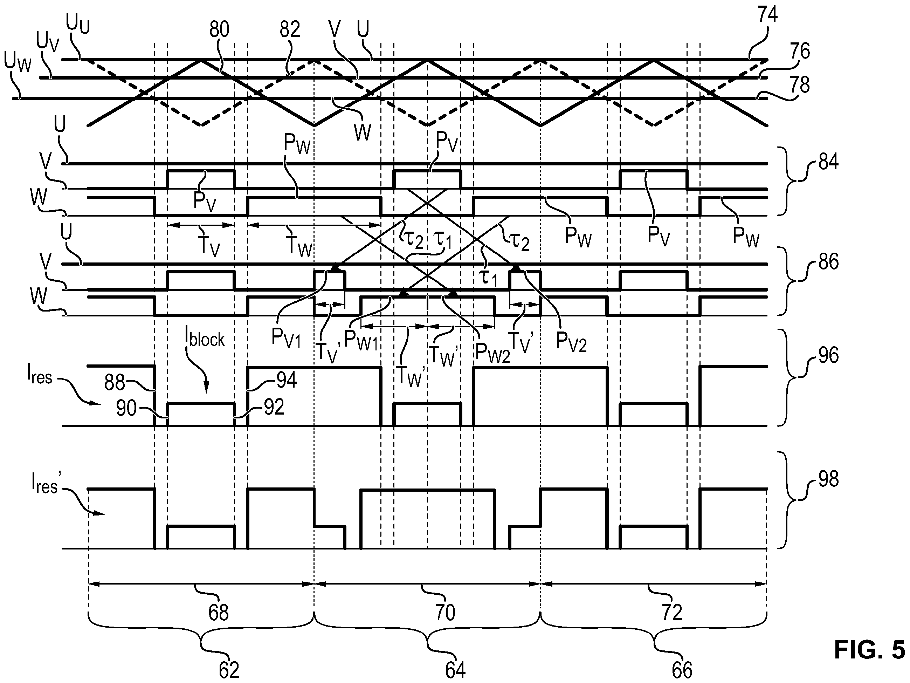

Anhand der Fig. 5 wird im Nachfolgenden der Signalverlauf an den einzelnen Phasenanschlüssen 22, 24, 26 gezeigt und erläutert, wie die Spannungs- beziehungsweise PWM-Signale an den einzelnen Phasenwicklungen U, V, W vorteilhaft gesteuert beziehungsweise geregelt werden können und welche Konsequenzen bezüglich der Ströme $I_U$, $I_V$, $I_W$ in den Phasenwicklungen U, V, W und des Eingangsstroms $I_E$ der externen Stromquelle 8 sich hieraus ergeben. In dem Ausführungsbeispiel der Fig. 5 wird die Phasenwicklung U auf ein konstantes, niedriges Spannungspotential, das bedeutet insbesondere auf das Erdpotential $U_G$ gelegt. Die Phasen V und W werden mit den pulsweitenmodulierten Ansteuersignalen versorgt.

Das Diagramm der Fig. 5 umfasst fünf horizontale, übereinander angeordnete Abschnitte. Horizontal, das bedeutet auf der X- oder Abszissenachse, ist die Zeit aufgetragen. Beispielhaft sind in der Fig. 5 drei Perioden 62, 64, 66 der PWM-Ansteuerung dargestellt, wobei eine Periode 62, 64, 66 jeweils eine Periodendauer 68, 70 und 72 aufweist, welche hierbei beispielsweise zwischen 20 μs (Mikrosekunden) und 50 μs lang ist.

Die Fig. 5 zeigt eine PWM-Ansteuerung, bei welcher die Phasenanschlüsse 22, 24, 26 des Elektromotors 4 jeweils mit einem PWM-(Puls-)Signal $P_V$, $P_W$ unterschiedlichen Tastgrads (duty cycle) angesteuert werden. Die momentanen Soll-Spannungen $U_U$, $U_V$ und $U_W$ der drei Phasen U, V und W sind in Fig. 5 mit einem Momentanwert 74, 76 und 78 jeweils als horizontale Linie dargestellt. Die Sollspannungswerte variieren hierbei über die Zeit in Abhängigkeit von der Drehzahl des Elektromotors 4 jeweils nach Art einer Sinusfunktion. Dies führt dazu, dass die Linien der Momentanwerte 74, 76 und 78 sich periodisch in senkrechter Richtung, das bedeutet entlang der Y- beziehungsweise Ordinatenachse, auf und ab bewegen.

Die sägezahnförmige Linie im oberen Abschnitt des Diagramms repräsentiert einen periodisch linear ansteigenden und linear abfallenden Zählerstand 80 eines in dem Controller 42 integrierten Zählers. Die Schnittpunkte zwischen den für einen bestimmten Zeitpunkt fest liegenden Schwellen der einzelnen Phasen U, V, W, das bedeutet den Momentanwerten 74, 76, 78 mit dem sägezahnartigen Zählerstand 80, repräsentieren die Zeitpunkte für das Erzeugen und Beenden der (PWM-)Pulse $P_V$, $P_W$, mit welchen die Phasenwicklungen V und W beaufschlagt werden. Dies bedeutet, dass im Falle einer hohen Spannungsschwelle der Momentanwert 74, 76, 78 niedrig ist, so dass die Tastzeit des impulsförmigen Pulses $P_V$, $P_W$ lang ist, die entsprechende Phase V, W also lange mit dem Phasenstrom $I_V$, $I_W$ bestromt beziehungsweise mit einer Spannung beaufschlagt wird. Ein gegenüber dem Zählerstand 80 um 180° phasenverschobener Zählerstand 82 ist in der Fig. 5 strichliniert dargestellt.

In den zweiten Abschnitt 84 und dritten Abschnitt 86 des Diagramms der Fig. 5 sind Spannungsverläufe der Phasenanschlüsse 22, 24, 26 zeitaufgelöst dargestellt.

In dem zweiten Abschnitt 84 ist eine PWM-Ansteuerung dargestellt in welcher in jeder Periode 62, 64 und 66 stets die gleichen Pulse $P_V$ und $P_W$ erzeugt werden, nachfolgend wird daher beispielhaft lediglich die erste Periode 62 beschrieben. In diesem Ausführungsbeispiel ist die Phase W zu Beginn der Periode 62 eingeschaltet und wird zu einem Zeitpunkt 88 ausgeschaltet. Zeitlich verzögert wird anschließend zu einem Zeitpunkt 90 die Phasenwicklung V mit einer Spannung versorgt. Nach einer Pulsdauer $T_V$ wird der Puls PV zu einem Zeitpunkt 92 beendet. Anschließend wird die Phase W zu einem Zeitpunkt 94 bis zum Ende der Periode 62 eingeschaltet. Der Puls $P_W$ erstreckt sich somit während einer Pulsdauer $T_W$ im Wesentlichen über jeweils zwei benachbarte Perioden 62, 64, 66. Dieser Spannungsverlauf wird für die PWM-Ansteuerung im zweiten Abschnitt 84 periodisch mit einer Taktfrequenz (Grundfrequenz) $f_{periode}$ wiederholt.

In dem vierten Abschnitt 96 und dem fünften Abschnitt 98 der Fig. 5 ist jeweils ein zeitlicher Verlauf eines durch die PWM-Ansteuerung resultierenden Wechselstroms $I_{res}$, $I_{res}'$ in der Stromquelle, also beispielsweise im Zwischenkreis 12, dargestellt. Der Abschnitt 96 zeigt hierbei den Wechselstrom $I_{res}$ für die PWM-Ansteuerung gemäß Abschnitt 84 und der Abschnitt 98 zeigt den Wechselstrom $I_{res}'$ für eine PWM-Ansteuerung gemäß dem Abschnitt 86.

In dem Abschnitt 96 ist der Wechselstrom $I_{res}$ für eine Betriebssituation gezeigt, in welcher die Stromrichtung der Phasenströme $I_V$ und $I_W$ der Phasen V und W bezüglich der Richtungen von und zu dem Sternpunkt 28 übereinstimmen. Die Stromstärke in der Phase V beträgt hierbei beispielsweise 1 A, und in der Phase W beträgt die Stromstärke 3 A. Die Stromstärke der Phase U beträgt beispielsweise -4 A und weist eine den Phasen V und W entgegengesetzte Stromrichtung auf. Zu Beginn der Periode 62 wird somit bis zum Zeitpunkt 88 ein Wechselstrom $I_{res}$ der Stromstärke 3 A erzeugt. Während der Pulsdauer TV wird entsprechend ein Wechselstrom $I_{res}$ mit 1 A erzeugt.

Der Wechselstrom $I_{res}$ weist somit während einer Periode 62, 64, 66 einen dreigeteilten Stromblock oder Wechselstromanteil $I_{block}$ auf, welcher sich periodisch Wiederholt. Beispielhaft wird nachfolgend der lediglich der mittlere Stromblock $I_{block}$ beschrieben welcher dem Puls $P_V$ entspricht, wobei die beiden seitlichen, durch den Puls $P_W$ erzeugten, Stromblöcke aufgrund der Linearität entsprechend beschreibbar sind.

Durch Fouriertransformation wird der Wechselstromanteil $I_{block}$ auf ein Frequenzspektrum $F_{block}(\omega)$ abgebildet, wobei $\omega$ die Kreisfrequenz ist. Durch die Anwendung des Verschiebesatzes ergibt sich für das Gesamtspektrum $F(\omega)$ von Wechselstromanteilen $I_{block}$ mehrerer (n) Perioden der Periodendauer $T_{periode}$

$$F(\omega) = \sum_n e^{-j\,\omega\,T_{periode}} F_{block}\,(\omega),$$

wobei j die imaginäre Einheit ist. Für die Taktfrequenz $f_{periode}$ beziehungsweise entsprechenden Vielfachen n x $f_{periode}$ folgt

$$e^{-j\,\omega\,T_{periode}} = e^{-j\,2\,\pi\,f_{periode}\,n\,T_{periode}} = e^{-j\,2\,\pi\,n} = 1.$$

Dies hat zur Folge, dass sich die Frequenz- beziehungsweise Wechselstromanteile des Wechselstroms $I_{res}$ bei n x $f_{periode}$ aufsummieren. Dadurch entstehen sogenannte EMV-Nadeln welche sich nachteilig auf das EMV-Verhalten der Maschine 2 auswirken.

Anhand der Abschnitte 86 und 98 der Fig. 5 wird nachfolgend ein Verfahren zur Reduzierung der EMV-Nadeln beschrieben. In dem Ausführungsbeispiel der Fig. 5 werden hierzu die Pulse $P_V$ und $P_W$ in der Periode 64 in jeweils zwei Halbpulse $P_{V1}$ und $P_{V2}$ sowie $P_{W1}$ und $P_{W2}$ geteilt. Die Halbpulse $P_{V1}$ und $P_{V2}$ sowie $P_{W1}$ und $P_{W2}$ weisen hierbei jeweils eine Pulsdauer $T_V'$ beziehungsweise $T_W'$ auf, welche der jeweils halben ursprünglichen Pulsdauer $T_V$ beziehungsweise $T_W$ entspricht. Grundsätzlich ist das Verfahren auf alle drei Phasen U, V, W anwendbar. In dem Ausführungsbeispiel der Fig. 5 ist die Phase U jedoch beispielhaft dauerhaft auf dem niedrigen Erdpotential $U_G$, so dass keine Verschiebung erfolgt.

Die Halbpulse $P_{V1}$, $P_{W1}$, $P_{V2}$, $P_{W2}$ werden anschließend mittels einer jeweiligen Verschiebezeit innerhalb der Periode 64 verschoben. Die Halbpulse $P_{V1}$ und $P_{W1}$ werden hierbei im Vergleich zu dem unverschobenen Pulsen $P_V$ und $P_W$ des Abschnitts 84 in diesem Ausführungsbeispiel mittels einer Verschiebezeit $T_1$ zeitlich verzögert. Die Halbpulse $P_{V2}$ und $P_{W2}$ werden mit einer Verschiebezeit $T_2$ zeitlich beschleunigt, sodass sie während der Periodendauer 70 den jeweils zugehörigen Halbpuls $P_{V1}$ und $P_{W1}$ vorlaufen.

Die Verschiebezeiten $T_1$ und $T_2$ sind in dem dargestellten Ausführungsbeispiel betraglich gleich. Insbesondere sind die Verschiebezeiten $T_1$ und $T_2$ betraglich gleich der halben Periodendauer 70. Es gilt

$$e^{-j\,2\,\pi\,f_{periode}\,n\,T_{periode}/2} = e^{-j\,\pi\,n} = -1,$$

das bedeutet, dass durch die Zeitverschiebung mittels der Verschiebezeiten $T_1$ und $T_2$ eine Phasenverschiebung von

180° erzeugt wird. Mit anderen Worten wird der Zählerstand 80 in den Zählerstand 82 umgesetzt.

Der resultierende Wechselstrom $I_{res}'$ weist somit während der Periode 64 einen um 180° phasenversetzten Verlauf auf. Wie in dem Abschnitt 98 vergleichsweise deutlich ersichtlich ist, wird hierdurch die Periodizität des Wechselstroms $I_{res}'$ beziehungsweise dessen Wechselstromanteile gestört. Dadurch summieren sich die Wechselstromanteile bei n x $f_{periode}$ nicht mehr auf, sondern werden stattdessen über mehrere Frequenzanteile verteilt. Bei dem Modulationsschema des Abschnitts 86 wird vorzugsweise jede zweite Periode eine derartige Pulsverschiebung mittels der Verschiebezeiten $T_1$ und $T_2$ durchgeführt.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

So ist es beispielsweise ebenso denkbar die Periodendauern 68, 70, 72 zu variieren, sodass die Perioden 62, 64 und 72 voneinander unterschiedliche Periodendauern aufweisen. Ebenso denkbar ist beispielsweise auch, dass mehrere Pulse $P_V$, $P_W$ von aufeinanderfolgenden Perioden 68, 70, 72 zeitlich verschoben werden. Wesentlich ist, dass die Aktivzeit je Phase U, V, W, das bedeutet die Pulsdauer, während einer Periode 62, 64, 66 im Wesentlichen konstant bleibt. Dadurch erfolgt lediglich eine Störung der Periodizität des Wechselstroms $I_{res}'$, nicht jedoch des Betriebs des Elektromotors 4.

Bezugszeichenliste

| | |
|---|---|
| 2 | Maschine |
| 4 | Elektromotor |
| 6 | Stromrichter |
| 8 | Stromquelle |
| 10 | Energiespeicher |
| 12 | Zwischenkreis |
| 12a | Hinleitung |
| 12b | Rückleitung |
| 14 | Zwischenkreiskondensator |
| 16 | Brückenschaltung |
| 18 | Sternschaltung |
| 20 | Brückenmodul |
| 22, 24, 26 | Phasenende |
| 28 | Sternpunkt |
| 30 | Induktivität |
| 32 | Widerstand |
| 34, 36, 38 | Spannungsabfall |
| 40 | Spannung |
| 42 | Controller |
| 44, 46 | Halbleiterschalter |
| 48, 50 | Potentialanschluss |
| 52, 54 | Steuerspannungseingang |
| 56 | Widerstand |
| 58 | Induktivität |
| 60 | Shuntwiderstand |
| 62, 64, 66 | Periode |
| 68, 70, 72 | Periodendauer |
| 74, 76, 78 | Momentanwert |
| 80, 82 | Zählerstand |
| 84, 86 | Abschnitt |
| 88, 90, 92, 94 | Zeitpunkt |
| 96, 98 | Abschnitt |

| | |
|---|---|
| U, V, W | Phase/Phasenwicklung |
| $I_U$, $I_V$, $I_W$ | Phasenstrom/Ausgangsstrom |
| $I_E$ | Eingangsstrom |

| | |
|---|---|
| $U_{ZK}$ | Zwischenkreisspannung |
| $U_G$ | Erdpotential |
| $I_{Bat}$ | Batteriestrom |
| $U_{Bat}$ | Batteriespannung |
| $U_U, U_V, U_W$ | Soll-Spannungen |
| $P_V, P_W$ | Pulssignal/Puls |
| $P_{V1}, P_{V2}, P_{W1}, P_{W2}$ | Halbpuls |
| $T_V, T_W$ | Pulsdauer |
| $T_V', T_W'$ | Pulsdauer |
| $I_{res}, I_{res}'$ | Wechselstrom |
| $I_{block}$ | Wechselstromanteil/Stromblock |
| $F_{block}(\omega)), F(\omega)$ | Frequenzspektrum |
| $\omega$ | Kreisfrequenz |
| $T_1, T_2$ | Verschiebezeit |
| $T_{periode}$ | Periodendauer |
| $f_{periode}$ | Taktfrequenz/Grundfrequenz |

**Patentansprüche**

1. Verfahren zum Betreiben einer elektrischen Maschine (2) mit einer Stromquelle (8) und mit einem Elektromotor (4) sowie mit einem dazwischen geschalteten Stromrichter (6),

- wobei ein Eingangsstrom ($I_E$) der Stromquelle (8) mittels einer pulsweitenmodulierten Ansteuerung einer Anzahl von Halbleiterschaltern (44, 46) des Stromrichters (6) in einen mehrphasigen Ausgangsstrom ($I_U, I_V, I_W$) für den Elektromotor (4) gewandelt wird,
- wobei während jeder Periode (62, 64, 66) der Ansteuerung für mindestens eine Phase (U, V, W) während einer Periodendauer (68, 70, 72) ein Puls ($P_V, P_W$) mit einer Pulsdauer ($T_V, T_W$) erzeugt wird, **gekennzeichnet dadurch, daß** in einer Periode (62, 64, 66) ein Puls ($P_V, P_W$) in einen voreilenden ersten Halbpuls ($P_{V1}, P_{W1}$) und in einen nacheilenden zweiten Halbpuls ($P_{V2}, P_{W2}$) mit jeweils halber Pulsdauer ($T_V', T_W'$) geteilt wird, und der erste Halbpuls ($P_{V1}, P_{W1}$) mit einer ersten Verschiebezeit ($T_1$) und der zweite Halbpuls ($P_{V2}, P_{W2}$) mit einer zweiten Verschiebezeit ($T_2$) innerhalb der Periodendauer (70) der Periode (64) zeitlich gegeneinander verschoben werden.

2. Verfahren nach Anspruch 1,
   **dadurch gekennzeichnet,**

   - **dass** der erste Halbpuls ($P_{V1}, P_{W1}$) mit der ersten Verschiebezeit ($T_1$) innerhalb der Periode (64) zeitlich verzögert wird, und
   - **dass** der zweite Halbpuls ($P_{V2}, P_{W2}$) mit der zweiten Verschiebezeit ($T_2$) innerhalb der Periode (64) zeitlich beschleunigt wird.

3. Verfahren nach Anspruch 1 oder 2,
   **dadurch gekennzeichnet,**
   **dass** für den Puls ($P_V, P_W$) als die erste und/oder zweite Verschiebezeit ($T_1, T_2$) während der Periodendauer (70) ein Bruchteil der Periodendauer (70) mit geradzahligem Nenner, insbesondere die halbe Periodendauer (70), eingestellt wird.

4. Verfahren nach einem der Ansprüche 1 bis 3,
   **dadurch gekennzeichnet,**
   **dass** die erste und zweite Verschiebezeit ($T_1, T_2$) des Pulses ($P_V, P_W$) während der Periode (70) betraglich gleich eingestellt werden.

5. Verfahren nach einem der Ansprüche 1 bis 4,
   **dadurch gekennzeichnet,**
   **dass** die Dauer der ersten und/oder zweiten Verschiebezeit ($T_1, T_2$) des Pulses ($P_V, P_W$) für aufeinanderfolgende Perioden (62, 64, 66) geändert wird.

**6.** Verfahren nach Anspruch 5,
**dadurch gekennzeichnet,**
**dass** die Dauer der ersten und/oder zweiten Verschiebezeit ($T_1$, $T_2$) des Pulses ($P_V$, $P_W$) für jede Periode (62, 64, 66) zufällig geändert wird.

**7.** Verfahren nach einem der Ansprüche 1 bis 6,
**dadurch gekennzeichnet,**
**dass** die Periodendauer (68, 70, 72) aufeinanderfolgender Perioden (62, 64, 66) variiert wird.

**8.** Verfahren nach einem der Ansprüche 1 bis 7,
**dadurch gekennzeichnet,**
**dass** die erste und/oder zweite Verschiebezeit ($T_1$, $T_2$) für Pulse ($P_V$, $P_W$) unterschiedlicher Phasen (U, V, W) unterschiedlich eingestellt werden.

**9.** Verfahren nach Anspruch 8,
**dadurch gekennzeichnet,**
**dass** die erste und/oder zweite Verschiebezeit ($T_1$, $T_2$) für Pulse ($P_V$, $P_W$) unterschiedlicher Phasen (U, V, W) in voneinander unterschiedlichen Perioden (68, 70, 72) angewendet werden.

**10.** Elektrische Maschine (2), insbesondere für ein Kraftfahrzeug, mit einer Stromquelle (8) und mit einem Elektromotor (4) sowie mit einem dazwischen geschalteten Stromrichter (6) mit einem Controller (42) zur Durchführung des Verfahrens nach einem der Ansprüche 1 bis 9.

**Claims**

**1.** Method for operating an electric machine (2) having a current source (8) and having an electric motor (4) as well as a current converter (6) connected therebetween,

- wherein an input current ($I_E$) of the current source (8) is converted into a multiphase output current ($I_U$, $I_V$, $I_W$) for the electric motor (4) by means of a pulse width modulated control of a number of semiconductor switches (44, 46) of the current converter (6),
- wherein, during each period (62, 64, 66) of the control, a pulse ($P_V$, $P_W$) having a pulse length ($T_V$, $T_W$) is generated for at least one phase (U, V, W) for a period length (68, 70, 72),

**characterised in that**
in a period (62, 64, 66), a pulse ($P_V$, $P_W$) is divided into a leading first half-pulse ($P_{V1}$, $P_{W1}$) and into a trailing second half-pulse ($P_{V2}$, $P_{W2}$), each having half a pulse length ($T_V'$, $T_W'$), and the first half pulse ($P_{V1}$, $P_{W1}$) having a first shift time ($T_1$) and the second half pulse ($P_{V2}$, $P_{W2}$) having a second shift time ($T_2$) are time-shifted relative to each other within the period length (70) of the period (64).

**2.** Method according to claim 1,
**characterised in that**

- the first half pulse ($P_{V1}$, $P_{W1}$) is time-delayed with the first shift time ($T_1$) within the period (64), and
- the second half pulse ($P_{V2}$, $P_{W2}$) is time-accelerated with the second shift time ($T_2$) within the period (64).

**3.** Method according to claim 1 or 2,
**characterised in that**
a fraction of the period length (70) having an even-numbered denominator, in particular half of the period length (70), is set as the first and/or second shift time ($T_1$, $T_2$) for the pulse ($P_V$, $P_W$) during the period length (70).

**4.** Method according to one of claims 1 to 3,
**characterised in that**,
the first and second shift time ($T_1$, $T_2$) of the pulse ($P_V$, $P_W$) are set to be equal during the period (70).

**5.** Method according to one of claims 1 to 4,
**characterised in that**

the length of the first and/or second time shift ($T_1$, $T_2$) of the pulse ($P_V$, $P_W$) is changed for successive periods (62, 64, 66).

6. Method according to claim 5,
   **characterised in that**
   the length of the first and/or second time shift ($T_1$, $T_2$) of the pulse ($P_V$, $P_W$) is randomly changed for each period (62, 64, 66).

7. Method according to one of claims 1 to 6,
   **characterised in that**
   the period length (68, 70, 72) of successive periods (62, 64, 66) is varied.

8. Method according to one of claims 1 to 7,
   **characterised in that**
   the first and/or second time shift ($T_1$, $T_2$) is set differently for pulses ($P_V$, $P_W$) of different phases (U, V, W).

9. Method according to claim 8,
   **characterised in that**
   the first and/or second shift time ($T_1$, $T_2$) is used in periods (68, 70, 72) different from one another for pulses ($P_V$, $P_W$) of different phases (U, V, W).

10. Electric machine (2), in particular for a motor vehicle, having a current source (8) and having an electric motor (4) as well as a current converter (6) connected therebetween having a controller (42) for carrying out the method according to one of claims 1 to 9.

**Revendications**

1. Procédé pour faire fonctionner une machine électrique (2) comprenant une source de courant (8) et un moteur électrique (4) ainsi qu'un convertisseur (6) interposé entre les deux,

   - dans lequel un courant d'entrée ($I_E$) de la source de courant (8) est converti en un courant de sortie multiphase ($I_U$, $I_V$, $I_W$) pour le moteur électrique (4) au moyen d'une commande modulée en largeur d'impulsion d'un certain nombre de commutateurs semi-conducteurs (44, 46) du convertisseur (6),
   - dans lequel une impulsion ($P_V$, $P_W$) est générée avec une durée d'impulsion ($T_V$, $T_W$) pendant chaque période (62, 64, 66) de la commande pour au moins une phase (U, V, W) pendant une durée de période (68, 70, 72),

   **caractérisé en ce que**

   - dans une période (62, 64, 66), une impulsion ($P_V$, $P_W$) est divisée en une première demi-impulsion avancée ($P_{V1}$, $P_{W1}$) et une deuxième demi-impulsion retardée ($P_{V2}$, $P_{W2}$) ayant chacune une demi-durée d'impulsion ($T_V'$, $T_W'$), et
   - la première demi-impulsion ($P_{V1}$, $P_{W1}$) et la deuxième demi-impulsion ($P_{V2}$, $P_{W2}$) sont décalées dans le temps à l'inverse l'une de l'autre à l'intérieur de la durée de période (70) de la période (64), respectivement d'un premier temps de décalage ($T_1$) et d'un deuxième temps de décalage ($T_2$).

2. Procédé selon la revendication 1,
   **caractérisé en ce que**

   - la première demi-impulsion ($P_{V1}$, $P_{W1}$) est retardée dans le temps à l'intérieur de la période (64) du premier temps de décalage ($T_1$), et **en ce que**
   - la deuxième demi-impulsion ($P_{V2}$, $P_{W2}$) est avancée dans le temps à l'intérieur de la période (64) du deuxième temps de décalage ($T_2$).

3. Procédé selon la revendication 1 ou 2,
   **caractérisé en ce qu'**
   une fraction de la durée de période (70) avec un dénominateur pair, en particulier la moitié de la durée de période (70), est réglée pour l'impulsion ($P_V$, $P_W$) en tant que premier et/ou deuxième temps de décalage ($T_1$, $T_2$) pendant

la durée de période (70).

4. Procédé selon l'une des revendications 1 à 3,
   **caractérisé en ce que**
   le premier et le deuxième temps de décalage ($T_1$, $T_2$) de l'impulsion ($P_V$, $P_W$) sont réglés à la même valeur pendant la période (70).

5. Procédé selon l'une des revendications 1 à 4,
   **caractérisé en ce que**
   la durée du premier et/ou du deuxième temps de décalage ($T_1$, $T_2$) de l'impulsion ($P_V$, $P_W$) est modifiée pour des périodes successives (62, 64, 66).

6. Procédé selon la revendication 5,
   **caractérisé en ce que**
   la durée du premier et/ou du deuxième temps de décalage ($T_1$, $T_2$) de l'impulsion ($P_V$, $P_W$) est modifiée de manière aléatoire pour chaque période (62, 64, 66).

7. Procédé selon l'une des revendications 1 à 6,
   **caractérisé en ce que**
   la durée de la période (68, 70, 72) de périodes successives (62, 64, 66) est modifiée.

8. Procédé selon l'une des revendications 1 à 7,
   **caractérisé en ce que**
   le premier et/ou le deuxième temps de décalage ($T_1$, $T_2$) sont réglés différemment pour des impulsions ($P_V$, $P_W$) de phases différentes (U, V, W).

9. Procédé selon la revendication 8,
   **caractérisé en ce que**
   le premier et/ou le deuxième temps de décalage ($T_1$, $T_2$) sont utilisés pour des impulsions ($P_V$, $P_W$) de phases différentes (U, V, W) dans des périodes (68, 70, 72) différentes les unes des autres.

10. Machine électrique (2), en particulier pour un véhicule automobile, comprenant une source de courant (8) et un moteur électrique (4), ainsi qu'un convertisseur (6) intercalé entre les deux et comprenant un contrôleur (42) pour la mise en oeuvre du procédé selon l'une des revendications 1 à 9.

FIG. 1

FIG. 2

FIG. 3

FIG. 4

**FIG. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10201400945 A1